# FASCICULE DE BREVET EUROPEEN

(11) **EP 2 869 046 B1**
(45) Date de publication et mention de la délivrance du brevet: **20.11.2019**
(21) Numéro de dépôt: 14187722.5
(22) Date de dépôt: 06.10.2014
(51) Int. Cl.: G01J 3/02, G01J 3/04, G01J 3/28

(54) **SPECTROMETRE A GRAND CHAMP TELECENTRIQUE, NOTAMMENT A MATRICE DE MEMS**
SPEKTROMETER MIT GROSSEM TELEZENTRISCHEM FELD, INSBESONDERE MIT MEMS-MATRIXANORDNUNG
SPECTROMETER WITH LARGE TELECENTRIC FIELD, IN PARTICULAR WITH A MEMS MATRIX

(30) Priorité: 31.10.2013 FR 1302520
(43) Date de publication de la demande: 06.05.2015
(73) Titulaire: Thales, 92400 Courbevoie (FR)
(72) Inventeur: Tetaz, Nicolas, 06150 CANNES LA BOCCA (FR)
(74) Mandataire: Bréda, Jean-Marc

(56) Documents cités:
- EP-A1- 1 079 215
- US-A1- 2010 238 440
- ZAMKOTSIAN F ET AL: "Optical MEMS in space instrumentsm for Earth Observation and Astronomy", PROCEEDINGS OF SPIE, SPIE, US, vol. 8616, 1 janvier 2013 (2013-01-01), pages 861618-1, XP007922731, ISSN: 0277-786X, DOI: 10.1117/12.2007292
- ROBBERTO M ET AL: "Applications of DMDs for Astrophysical Research", PROCEEDINGS OF SPIE, S P I E - INTERNATIONAL SOCIETY FOR OPTICAL ENGINEERING, US, vol. 7210, 1 janvier 2009 (2009-01-01), pages 72100A-1, XP007922732, ISSN: 0277-786X, DOI: 10.1117/12.809542 ISBN: 978-0-8194-9202-9
- SASIAN J M ED - DRIGGERS RONALD G: "DESIGN OF A SCHWARZSCHILD FLAT-FIELD, ANASTIGMATIC, UNOSTRUCTED, WIDE-FIELD TELESCOPE", OPTICAL ENGINEERING, SOC. OF PHOTO-OPTICAL INSTRUMENTATION ENGINEERS, BELLINGHAM, vol. 29, no. 1, 1 janvier 1990 (1990-01-01), pages 1-05, XP000085694, ISSN: 0091-3286, DOI: 10.1117/12.55563

## Description

Le domaine de l'invention est celui des spectromètres à grand champ, notamment embarqués sur satellite pour l'observation de la terre. Le domaine plus particulier de l'invention est celui des spectromètres à grand champ télécentriques au niveau de la fente.

Généralement, ce type d'instrument comporte deux parties principales. La première partie est un télescope d'entrée à grand champ. Ce télescope forme l'image d'une bande de terrain observé sur la fente d'entrée d'un spectromètre. Le champ de ce télescope est donc très étendu dans une direction et très faible dans l'autre direction. La couverture du champ dans cette direction est assurée par la rotation du satellite autour de la terre. Ainsi, les dimensions du champ observé sont typiquement de 60 degrés ou plus dans une direction et de quelques degrés dans la direction perpendiculaire. La seconde partie de l'instrument est un spectromètre comportant un élément dispersif, une optique et une matrice de photodétecteurs. L'optique forme l'image spectrale de la fente d'entrée sur la matrice, chaque ligne de la matrice étant dédiée à une plage de longueurs d'onde particulières. En fonction des observations à faire, ce type d'instrument fonctionne dans le visible ou le proche-infrarouge.

On citera, à titres d'exemples de réalisation de tels instruments, le spectromètre « MERIS », acronyme de « MEdium Resolution Imaging Spectrometer », l'instrument « OLCI » signifiant « Océan and Land Color Instrument », dédié à la surveillance de l'état des océans et des zones côtières et les projets d'instruments spectrométriques « Sentinel-4 », « Sentinel-5 » et « MicroCarb ».

Les télescopes d'entrée ont de nombreuses contraintes. Ils doivent posséder un grand champ dans une direction et être achromatique dans un grand domaine spectral. Leur ouverture numérique doit être au moins de f/6. La combinaison optique mise en œuvre doit être exempte de courbure de champ qui peut être très importante, compte-tenu des dimensions du champ d'observation.

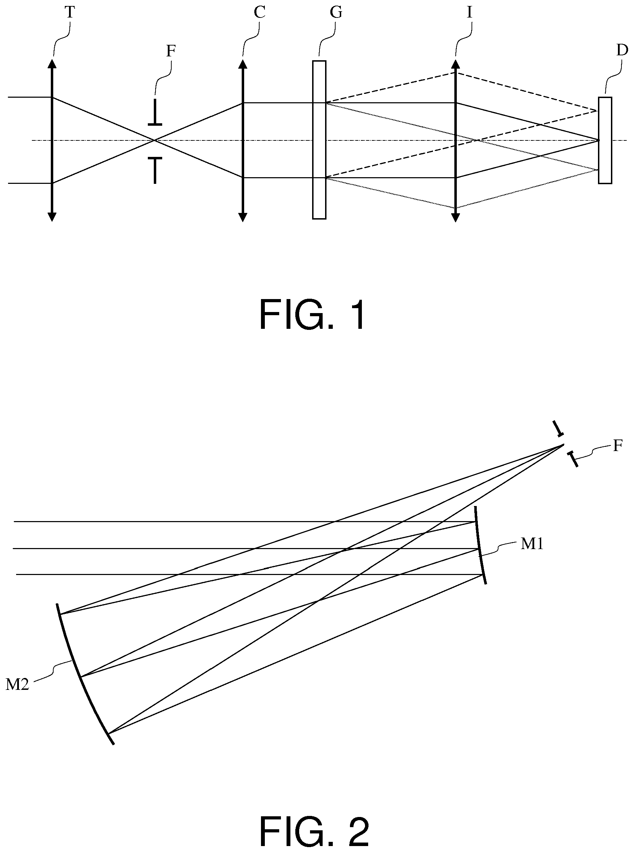

De plus, il est souhaitable que la solution optique soit télécentrique de façon à simplifier la réalisation de la partie purement spectrométrique de l'instrument. Cette propriété est illustrée sur la figure 1. Un télescope T représenté par une lentille simple sur la figure 1 forme l'image du paysage sur une fente F. En aval de la fente se trouve le spectromètre. L'image chromatique de cette fente est formée sur la matrice D de photodétecteurs au moyen d'un ensemble comprenant dans cet ordre un collimateur C, un disperseur chromatique G et un imageur I. Le disperseur est généralement un réseau de diffraction qui donne d'un rayon lumineux à une longueur d'onde et une incidente donnée un rayon diffracté dans une direction dépendant de la longueur d'onde comme on le voit sur la figure 1 où les rayons en pointillés sont à des longueurs d'onde différentes du rayon représenté en trait continu. Le télescope est télécentrique en sortie, ce qui signifie que la pupille de sortie du télescope est rejetée à l'infini. Le spectromètre est télécentrique en entrée. Par conséquent, les rayons lumineux dispersés sont focalisés sur la matrice à des endroits dépendant de leur longueur d'onde mais toujours sous une même incidence.

Pour satisfaire au mieux ces différentes contraintes, les télescopes d'entrée sont nécessairement des télescopes à miroir. Ainsi, il a été développé une première combinaison optique dite « TMA », signifiant « Three-Mirrors Anastigmat », puis d'autres solutions optiques comportant quatre ou cinq miroirs qui vérifient également ces différentes contraintes et qui possèdent plus de degrés de liberté que la solution à trois miroirs. Cependant, ces solutions sont relativement encombrantes. Or, il est important que le volume de l'instrument soit le plus faible possible compte-tenu des contraintes liées au matériel embarqué sur satellite.

Les combinaisons optiques les plus compactes sont celles comportant uniquement deux miroirs. Ainsi, un télescope dit de « Schwarzschild » comportant un miroir convexe M1 et un miroir concave M2 tels que représentés sur la figure 2 permet d'obtenir un télescope compact à grand champ. Cependant, cette solution comporte de la courbure de champ et n'est pas télécentrique.

Le brevet US 5 768 040 intitulé « Wide Field-of-view imaging spectrometer » propose différentes solutions pour pallier ces inconvénients.

Une première solution décrite en figure 3 de ce brevet consiste à disposer un miroir concave au foyer du télescope, à l'emplacement de la fente d'entrée du spectromètre. On résout ainsi le problème de la courbure de champ du télescope et du défaut de télécentricité mais on ajoute au moins un miroir supplémentaire.

Une seconde solution illustrée en figure 4 de ce même brevet US 5 768 040 consiste à disposer un faisceau de fibres optiques au niveau de la fente d'entrée. Chaque fibre optique est placée de façon à épouser la courbure de champ. La sortie des fibres optiques est disposée de façon à obtenir une fente d'entrée rectiligne. Là encore, on résout les problèmes de courbure de champ et de télécentricité mais en ajoutant un guide particulier d'images à fibres optiques.

D'autres exemples de l'état de la technique sont fournis par les articles "Optical MEMS in space instruments for Earth observation and astronomy" de Zamkotsian et al., Mars 2013; "Applications of DMDs for astrophysical research" de Robberto et al., 2009; "Design of a Schwarschild flat-field, anastigmatic, unobstructed, wide-field telescope" de Sasian, 1990; et des documents de brevet EP1079215, US20100238440 et EP2492734.

A titre d'exemple, l'instrument selon l'invention peut comporter également un télescope dit de « Schwarzschild » mais la compensation de la courbure de champ et la télécentricité sont obtenus par d'autres moyens, plus simples à mettre en œuvre. En effet, la combinaison du télescope est dite « flat- Schwarzschild » et la fente du spectromètre comporte un réseau de facettes réfléchissantes optiques orientées ou orientables permettant de rendre télécentrique la partie spectrométrique du télescope.

Plus précisément, l'invention a pour objet un système spectrométrique à grand champ comportant au moins un télescope optique et un spectromètre,
ledit télescope comportant une fente dans son plan focal ;
le spectromètre comportant des moyens de dispersion optique, un ensemble optique et des moyens de photodétection agencés de façon que l'image chromatiquement dispersée de la fente du télescope se forme sur lesdits moyens de photodétection, caractérisé en ce que la fente comporte un miroir comprenant une pluralité de micro-facettes, chaque micro-facette étant orientée de façon à réaliser une adaptation de pupille entre la pupille du télescope et la pupille du spectromètre.

Avantageusement, chaque micro-facette est un micro-miroir orientable d'un microsystème électromécanique, la fente comportant ainsi une pluralité de microsystèmes électromécaniques commandés électriquement.

Avantageusement, les orientations de chaque micro-facette sont telles que les rayons lumineux issus d'un même point de la pupille du télescope soient tous réfléchis parallèlement à eux-mêmes, le spectromètre étant ainsi télécentrique.

Avantageusement, le télescope comporte un premier miroir convexe et un second miroir concave agencés de façon à former une combinaison optique de type « Schwarzschild ».

Avantageusement, le premier miroir convexe et le second miroir concave sont agencés de façon à former une combinaison optique de type « flat Schwarzschild », la pupille d'entrée du télescope étant située au voisinage du second miroir convexe.

Avantageusement, l'ensemble optique comporte un troisième miroir concave et un quatrième miroir concave de façon à former un spectromètre de type « Offner ».

Avantageusement, le champ objet un rectangle très allongé dont les dimensions dans une direction sont supérieures ou égales à 60 degrés et les dimensions dans la direction perpendiculaire de l'ordre du degré ou de quelques degrés.

L'invention sera mieux comprise et d'autres avantages apparaîtront à la lecture de la description qui va suivre donnée à titre non limitatif et grâce aux figures annexées parmi lesquelles :
La figure 1 déjà commentée représente le synoptique d'un système spectrométrique à grand champ ;
La figure 2 déjà commentée représente une vue en coupe d'un télescope de type « Schwartzschild » ;
La figure 3 représente le principe de fonctionnement d'un microsystème électromécanique à micro-miroir orientable ;
La figure 4 représente le principe de fonctionnement d'un réseau de microsystèmes électromécaniques à micro-miroirs orientables selon l'invention disposés dans la fente du spectromètre ;
La figure 5 représente une vue en coupe d'un télescope de type « Flat Schwarzschild » ;
La figure 6 représente un exemple de réalisation d'un système spectrométrique à grand champ selon l'invention.

Sur les figures 2, 4, 5 et 6 représentants des systèmes optiques, on a adopté les conventions suivantes. Les composants optiques sont représentés en traits gras, les rayons lumineux correspondant à des champs centraux en traits fins et les rayons lumineux correspondant à des champs périphériques en traits fins pointillés.

Le système spectrométrique à grand champ selon l'invention comporte un télescope optique et un spectromètre. Chacun de ces deux ensembles optiques a ses propres contraintes de réalisation. Il est facile de disposer le plan focal du télescope dans le plan de la fente d'entrée du spectromètre. Il est plus difficile d'adapter la pupille de sortie du télescope à la pupille d'entrée du spectromètre. Aussi, le système selon l'invention comporte dans le plan image du télescope un miroir composé de micro-facettes réfléchissantes. Chaque facette plane a une orientation telle que, quelque soit la direction d'un faisceau incident issu de la pupille du télescope et se focalisant sur une facette déterminée de la fente d'entrée, le faisceau se réfléchit dans une direction déterminée, correspondant à une pupille prédéterminée du spectromètre. Dans une variante de réalisation, on dispose, dans le plan focal une fente comprenant une matrice de « MEMS » optiques comportant des micro-miroirs réfléchissants orientés.

A titre d'exemple non limitatif de réalisation, le télescope et le spectromètre fonctionnent avec des combinaisons optiques télécentriques. Or, comme il a été dit, la contrainte de télécentricité est difficilement compatible d'un encombrement réduit. Aussi, lorsque le télescope n'est pas initialement télécentrique, pour obtenir, au niveau de la fente F de sortie du télescope, des faisceaux lumineux télécentriques, on dispose alors dans le plan image du télescope soit un miroir à facettes fixes, soit une matrice de « MEMS » optiques réfléchissants orientés si l'on souhaite pouvoir modifier simplement l'orientation des facettes. Ainsi, chaque point de la fente réfléchit des faisceaux lumineux dans des directions identiques, de façon à recréer une pupille à l'infini.

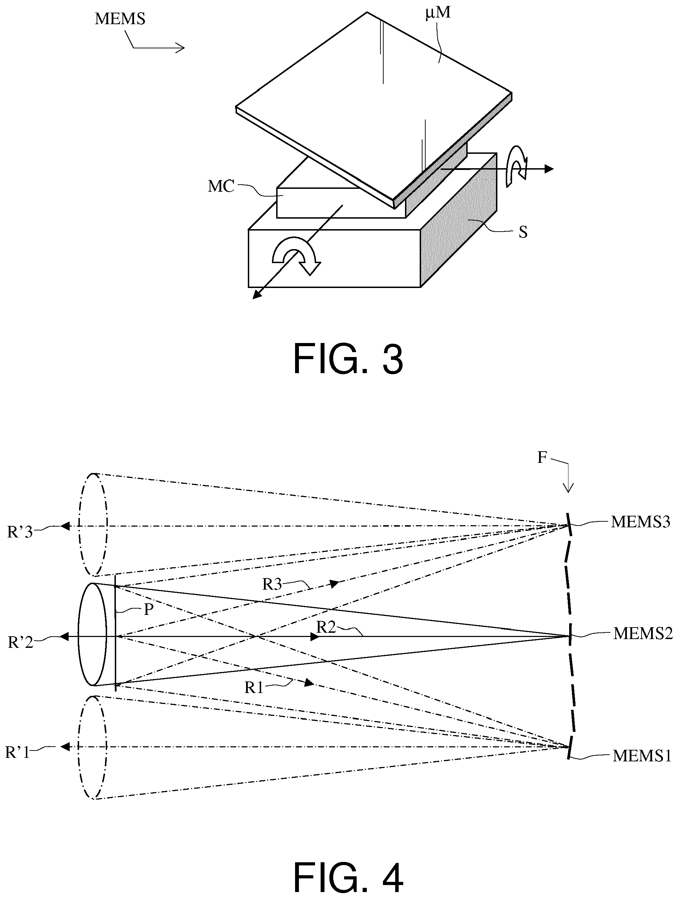

La figure 3 représente un MEMS optique selon l'invention. Il comporte un micro-miroir plan orientable, généralement de forme carrée. D'autres formes sont possibles de façon à s'adapter au mieux à la forme de la pupille et aux corrections à apporter. Ce micro-miroir µM est monté sur une plateforme MC orientable dans les deux directions de l'espace, les axes d'orientation sont représentés par des flèches semi-circulaires. L'orientation est commandée par des électrodes. L'ensemble est monté sur un substrat S en matériau semi-conducteur. Chaque micro-miroir est ainsi inclinable dans deux directions avec des angles d'environ +/- 12°. La taille des micro-miroirs est d'environ 10 à 20 microns. Ce type de système a de nombreuses utilisations. Ils sont, en particulier, utilisés pour réaliser des afficheurs de petites dimensions.

Dans le système selon l'invention, l'orientation de chacune des facettes ou de chacun des micro-miroirs est calculée afin que, pour tous les points du champ, les faisceaux réfléchis soient orientés dans des directions prédéterminées. Ce calcul ne pose aucune difficulté particulière, les incidences des rayons lumineux issus du télescope étant parfaitement connues au moyen des logiciels de calcul optique.

Si les directions sont toutes parallèles entre elles, on obtient ainsi la télécentricité souhaitée. La figure 4 illustre cette propriété. Elle représente une partie d'une fente à micro-miroirs selon l'invention. Sur cette figure 4, les rayons R1, R2 et R3 issus de la pupille P et incidents selon des incidences différentes sur les MEMS notés MEMS1, MEMS2 et MEMS3 donnent trois rayons réfléchis R'1, R'2 et R'3, tous parallèles entre eux.

L'utilisation d'une fente comportant des miroirs à facettes ou des MEMS de façon à retrouver la télécentricité peut s'appliquer à une grande variété de télescopes. Cependant, il est avantageux de l'utiliser en association avec une combinaison optique de type « Schwarzschild » comportant un premier miroir convexe et un second miroir concave. Ce type de télescope présente l'avantage de pouvoir fonctionner avec un grand champ objet dans un encombrement réduit.

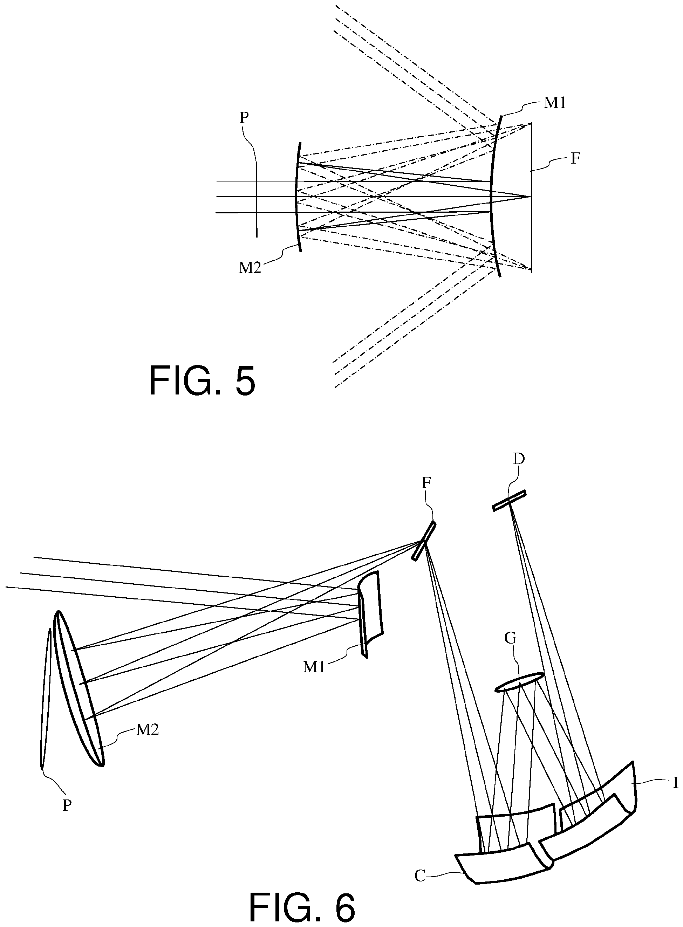

Un des inconvénients des télescopes de type « Schwarzschild » est que le plan image présente généralement de la courbure de champ. Cependant, certaines combinaisons optiques ne présentent pas ce défaut et sont exemptes de courbure de champ. On les appelle « Flat-Schwarzschild ». Il est donc préférable d'utiliser ce type de combinaison. On trouvera plus d'informations sur les télescopes « Flat-Schwarzschild » dans la publication intitulée « Design of a Schwarzschild flat-field, anastigmatic, unobstructed, wide-field telescope » de Jose M. Sasian - AT&T Bell Labs. (USA) parue dans Optical Engineering 29(1), 1-5 (Jan 01, 1990). On citera égalent le brevet US 4 037 943 intitulé « Reflection type image forming optical system having a large angle of view » dans le même domaine technique. La figure 5 représente une vue d'un tel télescope de type « Flat-Schwartzschild » et comportant un miroir convexe M1 et un miroir concave M2. Comme on le voit sur la figure 5, le plan image est dépourvu de courbure de champ et on peut disposer une fente plane réfléchissante dans ce plan image.

A titre d'exemple, le spectromètre associé au télescope de type « Schwarzschild » peut être un spectromètre de Offner comportant un premier miroir concave de collimation, un réseau de diffraction dispersif et un second miroir concave de focalisation formant l'image dispersée sur une matrice de photodétecteurs. L'ensemble optique comprenant les deux miroirs et le réseau est télécentrique.

La figure 6 représente une vue en perspective d'un système spectrométrique à grand champ selon l'invention. Ce système comporte un miroir concave M1 et un miroir convexe M2, l'ensemble formant un télescope de « Flat-Schwarzschild ». Une fente d'entrée réflective à MEMS est disposée dans le plan focal du télescope. La partie spectrométrique est du type Offner et comporte un premier miroir concave C de collimation, un réseau de diffraction G, un second miroir concave I de focalisation et une matrice de photodétecteurs D.

Une telle combinaison optique a un champ objet qui peut être égal ou supérieur à 60 degrés.

## Revendications

1. Système spectrométrique à grand champ comportant au moins un télescope optique (T) et un spectromètre,
ledit télescope comportant une fente (F) dans son plan focal ;
le spectromètre comportant des moyens de dispersion optique (G), un ensemble optique (C, I) et des moyens de photodétection (D) agencés de façon que l'image chromatiquement dispersée de la fente du télescope se forme sur lesdits moyens de photodétection, **caractérisé en ce que** la fente comporte un miroir comprenant une pluralité de micro-facettes, chaque micro-facette étant orientée de façon à réaliser une adaptation de pupille entre la pupille du télescope et la pupille du spectromètre, les orientations de chaque micro-facette étant telles que les rayons lumineux issus d'un même point de la pupille du télescope soient tous réfléchis parallèlement à eux-mêmes, le spectromètre étant ainsi télécentrique.

2. Système spectrométrique à grand champ selon la revendication 1, **caractérisé en ce que** chaque micro-facette est un micro-miroir (µM) orientable d'un microsystème électromécanique (MEMS), la fente comportant ainsi une pluralité de microsystèmes électromécaniques commandés électriquement.

3. Système spectrométrique à grand champ selon l'une des revendications précédentes, **caractérisé en ce que** le télescope comporte un premier miroir convexe (M1) et un second miroir concave (M2) agencés de façon à former une combinaison optique de type « Schwarzschild ».

4. Système spectrométrique à grand champ selon la revendication 3, **caractérisé en ce que** le premier miroir convexe et le second miroir concave sont agencés de façon à former une combinaison optique de type « flat Schwarzschild », la pupille d'entrée du télescope étant située au voisinage du second miroir convexe.

5. Système spectrométrique à grand champ selon l'une des revendications précédentes, **caractérisé en ce que** l'ensemble optique comporte un troisième miroir concave (C) et un quatrième miroir concave (I) de façon à former un spectromètre de type « Offner ».

6. Système spectrométrique à grand champ selon l'une des revendications précédentes, **caractérisé en ce que** le champ objet est un rectangle très allongé dont les dimensions dans une direction sont supérieures ou égales à 60 degrés et les dimensions dans la direction perpendiculaire de l'ordre du degré ou de quelques degrés.

## Patentansprüche

1. Spektrometrisches System mit großem Feld, das wenigstens ein optisches Teleskop (T) und ein Spektrometer umfasst,
wobei das Teleskop einen Schlitz (F) in seiner Fokalebene umfasst;
wobei das Spektrometer optische Dispersionsmittel (G), eine optische Baugruppe (C, I) und Fotodetektionsmittel (D) umfasst, die so angeordnet sind, dass das chromatisch dispergierte Bild des Schlitzes des Teleskops auf den Fotodetektionsmitteln entsteht, **dadurch gekennzeichnet, dass** der Schlitz einen Spiegel umfasst, der mehrere Mikrofassetten aufweist, wobei jede Mikrofassette zum Realisieren einer Pupillenanpassung zwischen der Pupille des Teleskops und der Pupille des Spektrometers orientiert ist, wobei die Orientierungen jeder Mikrofassette derart sind, dass die von einem selben Punkt der Pupille des Teleskops kommenden Lichtstrahlen alle parallel zueinander reflektiert werden, wobei das Spektrometer folglich telezentrisch ist.

2. Spektrometrisches System mit großem Feld nach Anspruch 1, **dadurch gekennzeichnet, dass** jede Mikrofassette ein orientierbarer Mikrospiegel (µM) eines elektromechanischen Mikrosystems (MEMS) ist, wobei der Schlitz somit mehrere elektrisch gesteuerte elektromechanische Mikrosysteme umfasst.

3. Spektrometrisches System mit großem Feld nach einem der vorherigen Ansprüche, **dadurch gekennzeichnet, dass** das Teleskop einen ersten konvexen Spiegel (M1) und einen zweiten konkaven Spiegel (M2) umfasst, die so angeordnet sind, dass sie eine optische Kombination des Typs "Schwarzschild" bilden.

4. Spektrometrisches System mit großem Feld nach Anspruch 3, **dadurch gekennzeichnet, dass** der erste konvexe Spiegel und der zweite konkave Spiegel so angeordnet sind, dass sie eine optische Kombination des Typs "flat Schwarzschild" bilden, wobei die Eintrittspupille des Teleskops sich in der Nähe des zweiten konvexen Spiegels befindet.

5. Spektrometrisches System mit großem Feld nach einem der vorherigen Ansprüche, **dadurch gekennzeichnet, dass** die optische Baugruppe einen dritten konkaven Spiegel (C) und einen vierten konkaven Spiegel (I) umfasst, so dass ein Spektrometer des Typs "Offner" gebildet wird.

6. Spektrometrisches System mit großem Feld nach einem der vorherigen Ansprüche, **dadurch gekennzeichnet, dass** das Objektfeld ein sehr lang gestrecktes Rechteck ist, dessen Abmessungen in einer Richtung gleich oder größer als 60 Grad sind und dessen Abmessungen in der lotrechten Richtung von der Größenordnung von einem Grad oder von mehreren Graden ist.

## Claims

1. A wide-field spectrometric system comprising at least one optical telescope (T) and one spectrometer,
said telescope comprising a slot (F) in the focal plane thereof,
the spectrometer comprising optical dispersion means (G), an optical assembly (C, I) and photodetection means (D) arranged so that the image chromatically dispersed from the slot of the telescope forms on said photodetection means, **characterised in that** the slot comprises a mirror comprising a plurality of microfacets, each microfacet being oriented so as to perform pupil matching between the pupil of the telescope and the pupil of the spectrometer, the orientations of each microfacet being such that the light rays originating from the same point of the pupil of the telescope are all reflected parallel to themselves, the spectrometer thus being telecentric.

2. The wide-field spectrometric system as claimed in claim 1, **characterised in that** each microfacet is an orientable micromirror (*µ*M) of a micro-electromechanical system (MEMS), the slot thus comprising a plurality of electrically controlled micro-electromechanical systems.

3. The wide-field spectrometric system as claimed in any one of the preceding claims, **characterised in that** the telescope comprises a first convex mirror (M1) and a second concave mirror (M2) arranged so as to form a "Schwarzschild" type optical combination.

4. The wide-field spectrometric system as claimed in claim 3, **characterised in that** the first convex mirror and the second concave mirror are arranged so as to form a "flat Schwarzschild" type optical combination, the entrance pupil of the telescope being located in the vicinity of the second convex mirror.

5. The wide-field spectrometric system as claimed in any one of the preceding claims, **characterised in that** the optical assembly comprises a third concave mirror (C) and a fourth concave mirror (I) so as to form an "Offner" type spectrometer.

6. The wide-field spectrometric system as claimed in any one of the preceding claims, **characterised in that** the object field is a highly elongated rectangle, the dimensions of which in one direction are greater than or equal to 60 degrees and the dimensions of which in the perpendicular direction are of the order of one degree or of several degrees.
